# EUROPEAN PATENT APPLICATION

(11) **EP 4 498 301 A1**
(43) Date of publication of application: **29.01.2025**
(21) Application number: 23208735.3
(22) Date of filing: 09.11.2023
(51) Int. Cl.: G06Q 10/06, G06Q 10/10, G06Q 30/018, G06Q 50/04

(54) **GREENHOUSE GAS VERIFYING SYSTEM AND METHOD THEREOF**

(30) Priority: 28.07.2023 TW 112128479
(71) Applicant: Alfa Digital Co., Ltd., 104 Taipei City (TW)
(72) Inventor: LEE, Elim, 104 Taipei City (TW)
(74) Representative: Lang, Christian

(57) **Abstract**

A greenhouse gas verifying system and method includes a verifying unit end, and a plurality of verified unit ends connected to the verifying unit end through a communication network. The verified unit ends provide the verification report and inventory list, and the document voucher image data attached to each item listed in the verification process, and other information to be verified. The verifying unit end conducts a verification of the OCR data, cited carbon coefficient data, and other necessary data using a sampling proportion on the verification report, the inventory list, and the document voucher image data. A certification assignment operation is carried out when the verification data is correct; If the data is incorrect, an inspection finding report will be provided to the supplier, and before the next stage of on-site verification, a new verification report and inventory list will be provided to the verifying unit end.

## Description

### BACKGROUND

### Field of the Invention

The present invention relates to a greenhouse gas verifying system and method thereof, and more particularly to a greenhouse gas verifying system and method, which can save a lot of manpower and time, simplify the operation process, accelerate the on-site verification operation time, and can be used for 100% activity data and carbon coefficient verifying.

### Description of Related Art

Greenhouse gases (GHG), also known as greenhouse effect gases, refer to the gas components in the atmosphere that contribute to the greenhouse effect. Humans heavily use fossil fuels such as coal and oil, which produce carbon dioxide (CO2) during combustion and emit it into the atmosphere. The aforementioned carbon dioxide is one of the greenhouse gases, while others also include ozone (O3), methane (CH4), etc. This also allows the atmosphere to absorb more Earth radiation, causing the Earth to become hotter and hotter. According to the model prediction, as the global consumption of fossil fuels increases, the average surface temperature may increase by 2 °C to 6 °C by the end of the 21st century. Therefore, only by quickly and effectively reducing greenhouse gas emissions at this moment can the Earth's climate system be unable to suppress warming and subsequent butterfly effects.

Based on the warming of the earth's surface caused by greenhouse gases, leading to extreme climate phenomena, the United Nations calls for urgent carbon reduction actions. "Net zero carbon reduction" has become a global common topic, and more than 110 countries around the world have declared to achieve the goal of net zero greenhouse gas emissions by 2050 (some countries by 2060). Therefore, for enterprises that cannot stay out of carbon reduction plans, fail to implement greenhouse gas inventories, and develop carbon reduction strategies, it may affect their operational competitiveness. However, it is not easy for enterprises to achieve carbon reduction or zero carbon reduction. They need to first conduct a verifying of greenhouse gases before setting reduction targets and implementing reduction strategies, in order to achieve carbon neutrality.

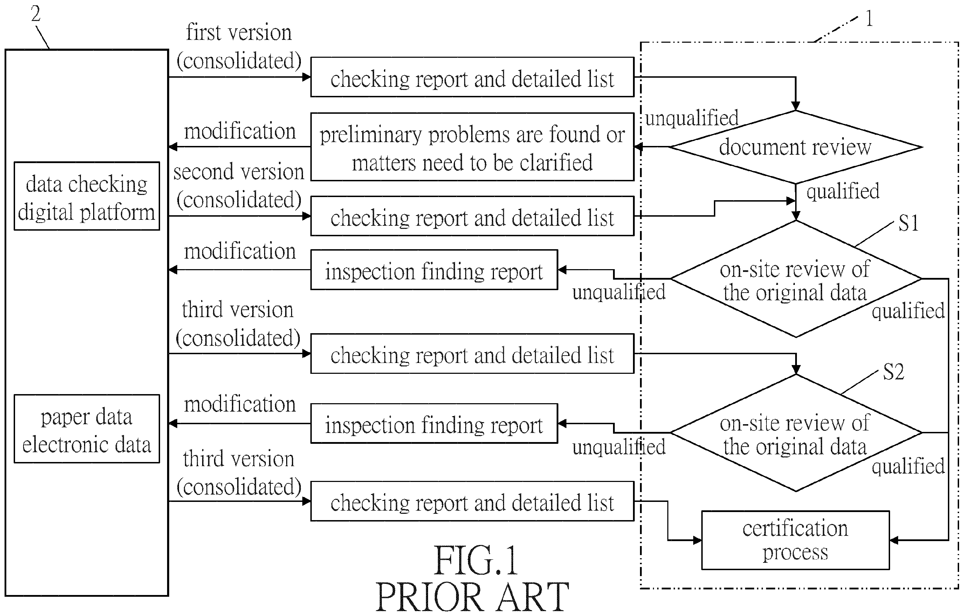

The carbon emission verification of greenhouse gases is mainly manual based, and the verifying process is shown in FIG. 1 and includes at least the following steps:
1. The verified unit end 1 provides a first version of the consolidated verification report and inventory list to the verifying unit end 2.
2. The verifying unit end 2 conducts a document review of the first version of the consolidated verification report and inventory list; If there are no issues, directly goes to the verified unit end 1 for on-site review of the original data; If preliminary problems are found or matters need to be clarified, they will be returned to the verified unit end 1 for revision.
3. The verified unit end 1 provides a second version of the consolidated verifying report and inventory list to the verifying unit end 2.
4. The verifying unit end 2 conducts a document review of the second version of the consolidated verifying report and inventory list, and directly goes to the verified unit end 1 for on-site review of the original data(S1); If there are no issues, it means it is qualified and the certification process is carried out. If the data is incorrect or needs to be clarified, a report on verifying findings will be issued to the verified unit end 1 for response, and before on-site verifying in the next stage, a new verification report and inventory list will be made again and provided to the verifying unit end 2.
5. The verified unit end 1 provides a third version of the consolidated verification report and inventory list to the verifying unit end 2.
6. The verifying unit end 2 conducts a document review of the third version of the consolidated verifying report and inventory list, and directly goes to the verified unit end 1 for on-site review of the original data(S2); If there are no issues, it means it is qualified and the certification process is carried out. If the data is incorrect or needs to be clarified, a report on verifying findings will be issued to the verified unit end 1 for response, and before on-site verifying in the next stage, a new verifying report and inventory list will be made again and provided to the verifying unit end 2.

The traditional greenhouse gas emission verification method may require different on-site verifying processes (S1~SN) depending on the complexity of the organizational field or product composition, and each verifying may require multiple verifying members (1-multiple people) to participate in on-site verifying operations. The verifying process is conducted by manual sampling of 10% to 20% or the proportion of original data that meets the inspection requirements, so it takes a lot of time to prepare and confirm the verifying data.

In view of this, after continuous research and experiments, the applicant conceived the design of a greenhouse gas verifying system and method, which can save a lot of manpower and time, simplify the operation process, accelerate the on-site verification operation time, and can be used for 100% activity data and carbon coefficient verifying.

### SUMMARY

The main objective of the present invention is to provide a greenhouse gas verifying system and method, which directly conduct verification operation against the verified unit ends that use digital platform to collect data, therefore saving a lot of manpower and time, simplifying the work process, accelerating on-site verification time, and carrying out 100% activity data and carbon coefficient verifying work.

The aforementioned greenhouse gas verifying system and method at least comprises a verifying unit end, and a plurality of verified unit ends connected to the verifying unit end through a communication network. The verified unit ends provide the verification report and inventory list, as well as the document voucher image data attached to each item listed in the verification process, and other information to be verified. The verifying unit end conducts a verification of the optical character recognition (OCR) data, cited carbon coefficient data, and other necessary data using a sampling proportion on the verification report, the inventory list, and the document voucher image data. If the verification data is correct, the certification assignment operation will be carried out; If the data is incorrect or needs to be clarified, the inspection finding report will be provided to the supplier as response, and before the next stage of on-site verification, a new verification report and inventory list will be produced and provided to the verifying unit end 3. This can save a lot of manpower and time, simplify the work process, accelerate on-site verification time, and carry out 100% activity data and carbon coefficient verifying work.

The aforementioned greenhouse gas verifying system, wherein the verifying unit end includes at least one accounting organization and product carbon emission numerical module, a verification report and inventory list module, a major emission source activity data sampling module, an OCR character recognition module, an interactive sampling data verification platform module, and a verification database.

The aforementioned greenhouse gas verifying system, wherein the accounting organization and product carbon emission numerical module calculates carbon emissions of all direct/indirect emission sources of the verified unit ends based on calculation scope of an organizational boundary and an operational boundary.

The aforementioned greenhouse gas verifying method includes the steps of: calculation of carbon verification value, sampling proportion operation, confirm activity data, comparison of software built-in carbon verification coefficient, on-site verification, certification assignment, and etc.

The aforementioned greenhouse gas verifying method, wherein the verification database provides the carbon coefficients of various countries or third-party manufacturers, as well as the carbon footprints marked on equipment of various brands/models, and other verification related data for comparison by the OCR character recognition module.

### BRIEF DESCRIPTION OF THE DRAWINGS

FIG. 1 is a flow chart for conventional verifying method;
FIG. 2 is a system architecture diagram of the present invention;
FIG. 3 is a carbon emission calculation diagram of the direct/indirect emission sources of the present invention;
FIG. 4 is a greenhouse gas verification data source list of the present invention;
FIGs. 5A and 5B are a schematic diagram of the inventory list of the present invention;
FIGs. 6 and 7 are schematic diagrams of image data for large devices of the present invention; and
FIGs. 8 and 9 are verification flowcharts of the present invention.

### DETAILED DESCRIPTION

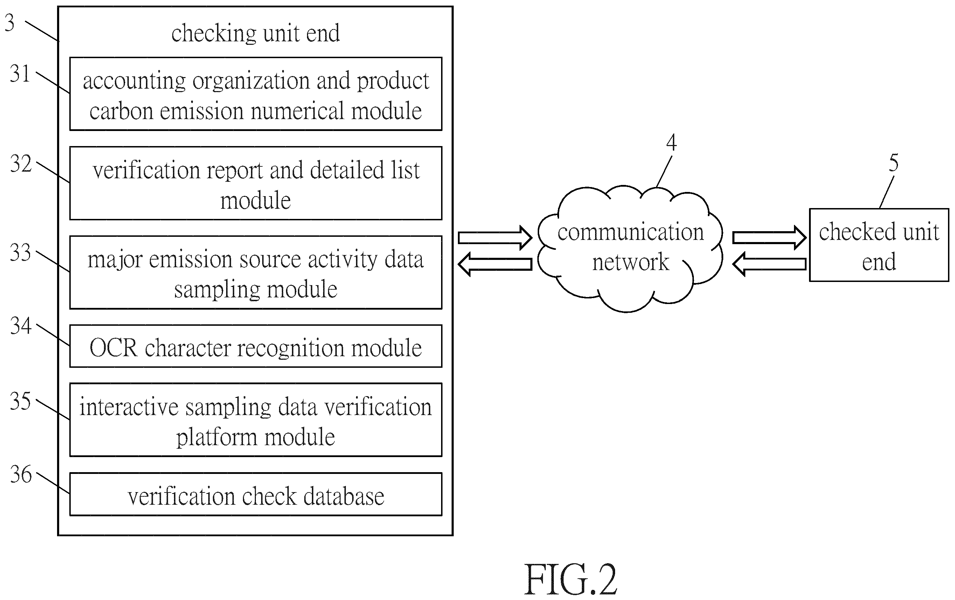

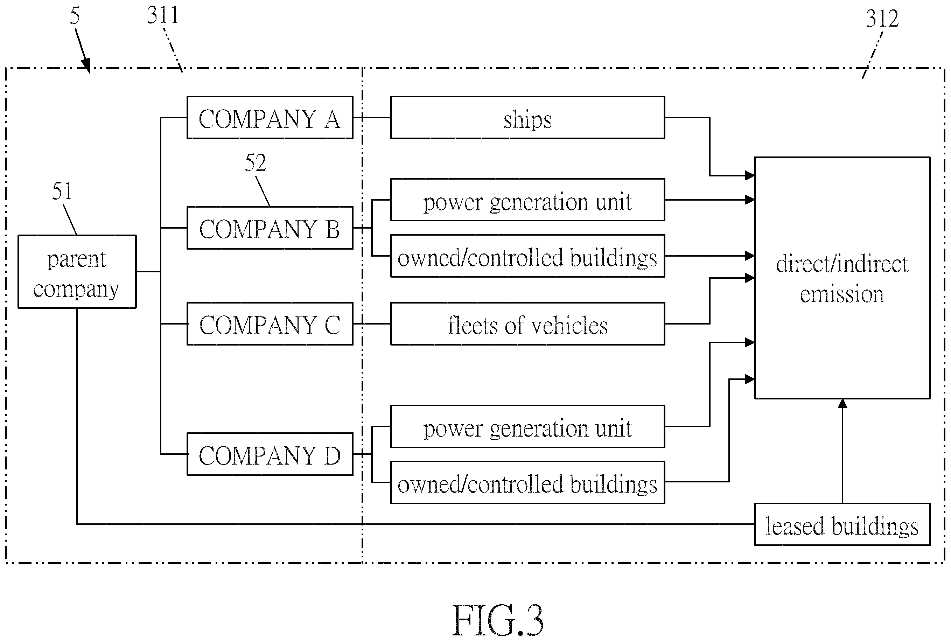

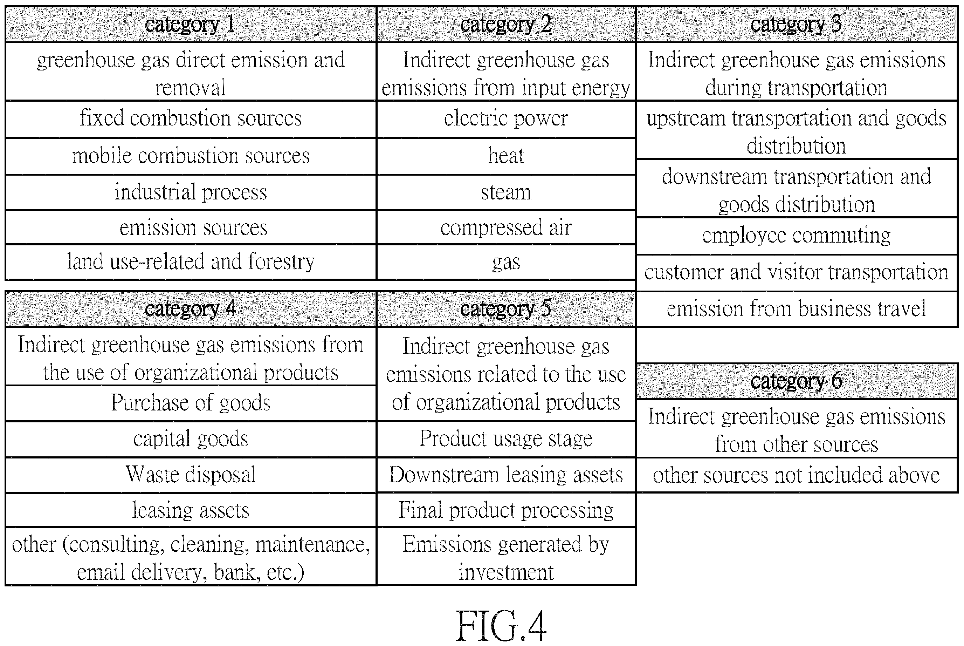

Please refer to both FIGs. 2 and 3, and in conjunction with FIG. 4, they are the system architecture diagram, carbon emission calculation diagram for direct/indirect emission sources, and greenhouse gas verification data source list of the present invention. As shown in the drawings, the system architecture of the present invention includes at least one verifying unit end 3, and a plurality of verified unit ends 5 connected to the verifying unit end 3 through a communication network 4. Among them, the verifying unit end 3 includes at least one accounting organization and product carbon emission numerical module 31, a verification report and inventory list module 32, a major emission source activity data sampling module 33, an OCR character recognition module 34, an interactive sampling data verification platform module 35, and a verification database 36.

The accounting organization and product carbon emission numerical module 31 calculates the carbon emissions of all direct/indirect emission sources of the verified unit ends 5 mainly based on the calculation scope of an organizational boundary 311 and an operational boundary 312. The calculation method can be roughly presented by the carbon emission calculation chart for direct/indirect emission sources as shown in FIG. 3, wherein the subsidiaries 52 (Company A to Company D) under the parent company 51 of the verified unit ends 5 belong to the calculation category of the organizational boundary 311; The ships, power generation units, owned/controlled buildings, fleets of vehicles, and leased factories of the subsidiaries 52 belong to the calculation scope of operational boundary 312. Product carbon emission verification is based on the ISO 14067 carbon footprint specification to calculate the direct/indirect carbon emissions generated by a product throughout its entire lifecycle. The monitoring calculation method is roughly as follows:
1. Direct monitoring method: Directly monitoring exhaust concentration and flow rate to measure greenhouse gas emissions.
2. Mass balance method: The balance calculation of material mass and energy input, output, consumption, and conversion in the manufacturing process.
3. Emission coefficient method: Emissions=appropriate activity intensity data × Emission coefficient × GWP.

At this stage, the emission coefficient method is mainly used to calculate various carbon emissions. This module uses artificial intelligence to verify the correctness of verification data, whether the coefficients used are reasonable, and to enhance the accuracy of artificial intelligence judgment by collecting feedback from the manual review process.

The verification report and inventory list module 32 is used to record and report the greenhouse gas emissions at the verified unit ends 5. Among them, the verification report is an overview file used to evaluate and record the greenhouse gas verification results of the verified unit ends 5, which is usually written by professional verifying agencies or internal verification teams. This report covers key contents such as the verification objectives, methods, scope, data collection process, emission calculation methods, and emission results of the verified unit ends 5. The inventory list is a list that records the greenhouse gas emission sources and related information of the verified unit ends 5 within the verification scope. It subdivides and categorizes the emissions of the verified unit ends 5, including emission source projects of different categories (such as energy use, transportation, manufacturing processes, etc.). The verification report is shown in FIG. 4, which can be divided into direct greenhouse gas emissions and indirect greenhouse gas emissions.

The direct greenhouse gas emissions include fuel combustion of stationary equipment, such as the fixed combustion sources of the boilers, furnaces, combustion furnaces, etc; Mobile combustion sources for conveyance vehicles that are under control, for transportation, such as raw materials, products, waste, and employee transportation; The emission sources of acetylene and CO2 used in cutting from the physical or chemical process emissions of catalytic cracking in the refining process; Intentional and unintentional emissions, such as leakage emission sources the leakage of fillers or refrigerant from equipment joints, seals; The change from forest land to agricultural land or from cultivated land to non-cultivated land may result in emission sources from land use changes where carbon stock changes.

The greenhouse gas emissions include, for example, the production from input energy, electricity consumption, steam, thermal energy, cooling, compressed air, etc; the emission from the transportation, such as the upstream transportation of goods, downstream transportation of goods, employee commuting, etc; emission from the factory, equipment, etc. of products used by the organization; Investment generation, equity debt, investment debt, etc. derived from the use of organizational products.

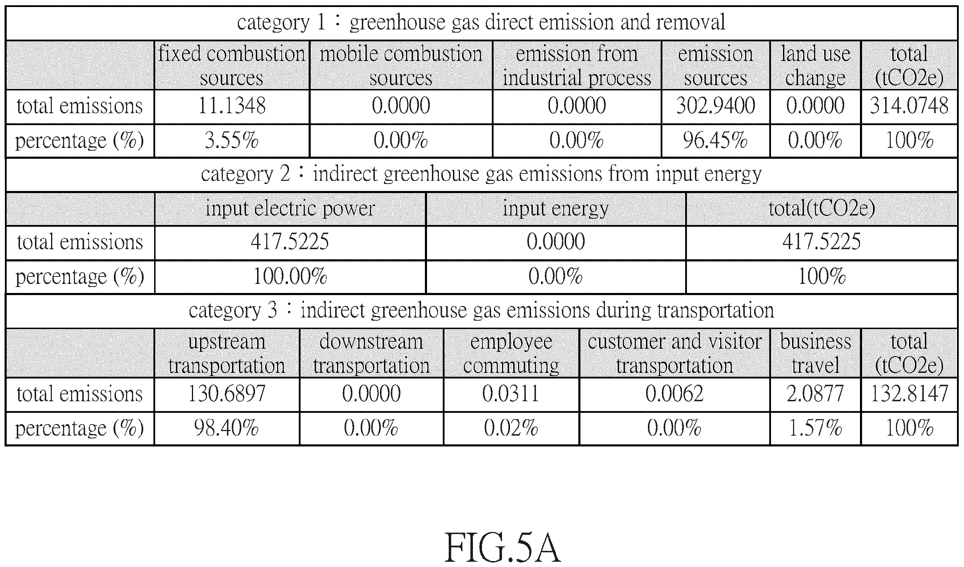

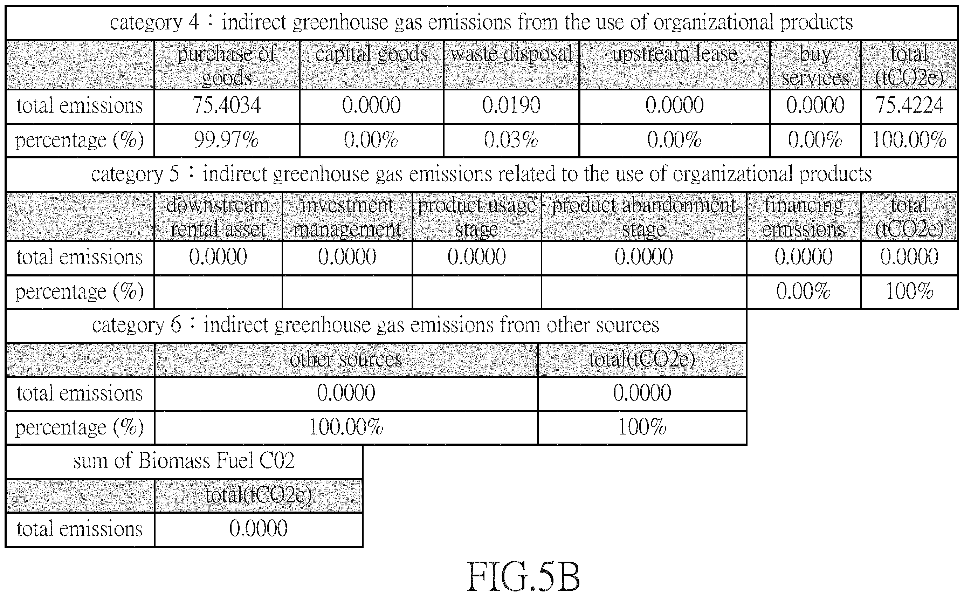

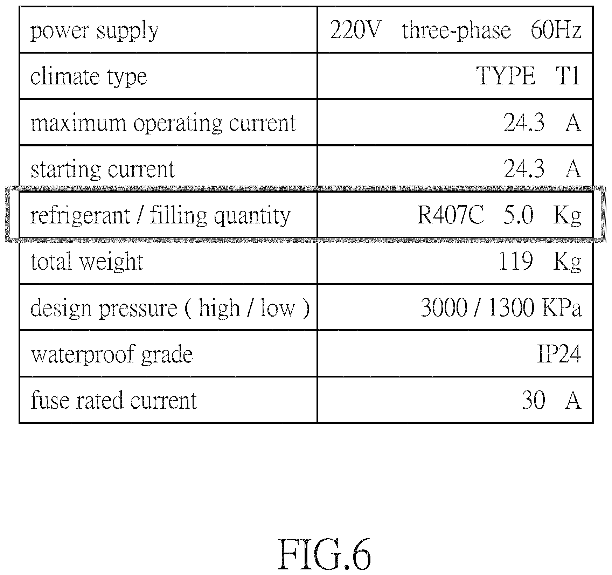

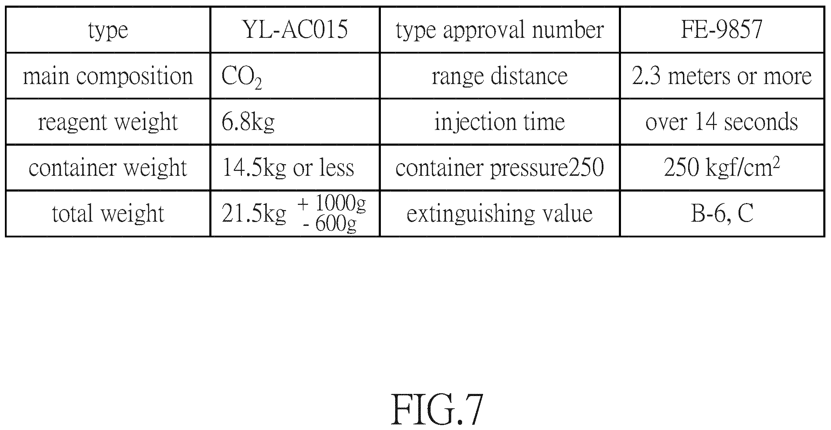

The inventory list is shown FIGs. 5A and 5B, providing a detailed description of the emissions of different activities and processes of the verified unit ends 5. For example, the input power is 417.5225, accounting for 100%, the input energy is 0.0000, accounting for 0.00%; and the total is 417.5225 (Tco2e). Help organizations better understand emission sources, identify potential emission reduction opportunities, and develop and implement subsequent emission reduction strategies. The various GHG emission inventory listed in the aforementioned verification are presented with different documentary image data, such as: purchase order, electricity bill, fuel invoice, commuting distance... For larger equipment (such as chillers, air conditioners, water dispensers, dehumidifiers, etc.), the device nameplate and the nameplate photo on the discharge source are taken as the document voucher image data (as shown in FIGs. 6 and 7). The process of verifying the present invention is to verify the correctness of the items listed in the verification process report and inventory list.

The major emission source activity data sampling module 33 is designed to determine the sampling quantity (proportion) and allocation of samples in various categories, as well as the sampling allocation under various evaluation modes that cause differences in data quality. It must have the ability to adjust flexibly, facilitate setting, and self-learning.

The OCR character recognition module 34 is used to perform optical character recognition on the document voucher image data attached to each item listed in the verification process (such as purchase orders/electricity bills/distance/... and other related information), as well as the nameplate photos on the emission source, carry out optical character identification to obtain relevant text and digital data, and compare the relevant verifying data provided by the verification database 36, and have the ability to provide the collaborative platform for the identification of blurred, stained and other affected conditions caused by long-term placement, and then identify again after discussion and strengthen artificial intelligence learning.

The interactive sampling data verification platform module 35 is a collaborative platform for the aforementioned modules. Although the present invention emphasizes the artificial intelligence verifying method, for the part that cannot be 100% completed by automated verifying, the collaborative platform still has to disclose the relative information, providing verifiers with questions or suggestions for replacement, and the verified unit ends 5 provide reply explanations or replacement data, simplify the process of document exchange between both parties and reduce the on-site verifying work of verifiers at the verifying unit end 3.

The verification database 36 provides the necessary data for relevant verifying work, such as:
1. Carbon coefficient databases provided by various countries or third-party manufacturers: Different countries provide different definitions of carbon coefficients. For items beyond the defined range, professional third-party evaluations can be used to produce carbon coefficients, or estimated carbon coefficients can be obtained by self-definition and analogy.
2. Basic information database for each brand of equipment: It provides basic information labeled by each brand/model of equipment, such as electricity consumption, product carbon footprint, and other information.

Through the aforementioned combination, the verified unit ends 5 provide the verification report and inventory list, as well as the document voucher image data attached to each item listed in the verification process, and other information to be verified. The verifying unit end 3 conducts a verification of the optical character recognition (OCR) data, cited carbon coefficient data, and other necessary data using a sampling proportion on the verification report, the inventory list, and the document voucher image data. If the verification data is correct, the certification assignment operation will be carried out; If the data is incorrect or needs to be clarified, the inspection finding report will be provided to the supplier as response, and before the next stage of on-site verification, a new verification report and inventory list will be produced and provided to the verifying unit end 3. This can save a lot of manpower and time, simplify the work process, accelerate on-site verification time, and carry out 100% activity data and carbon coefficient verifying work.

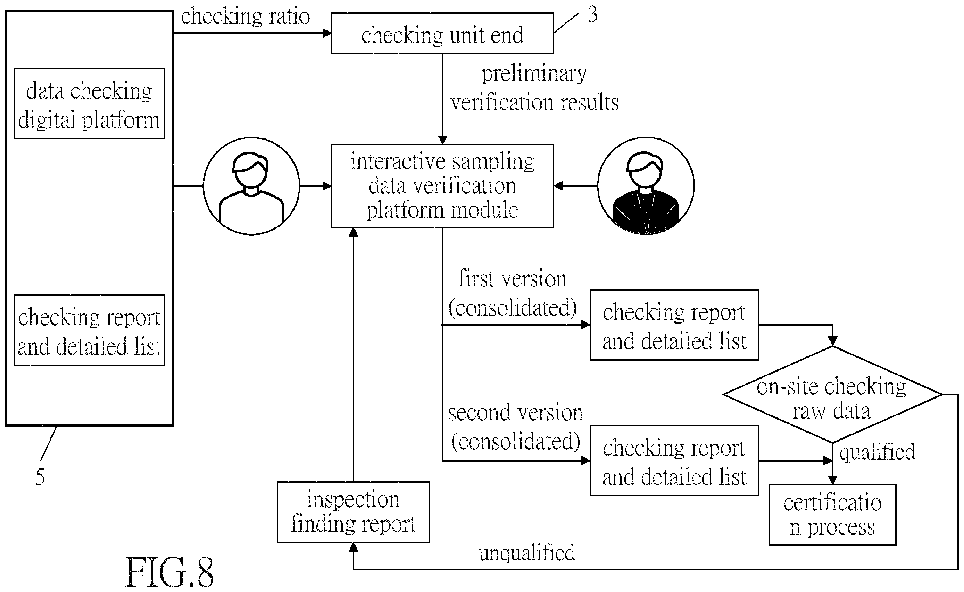

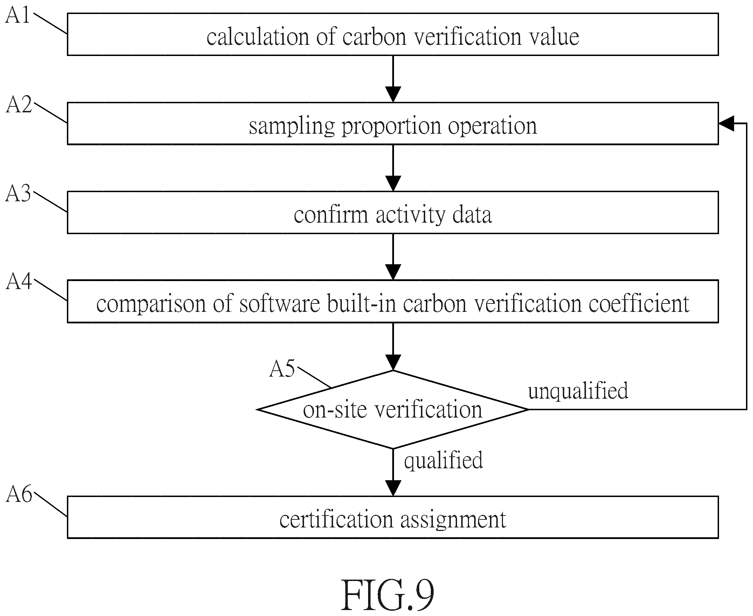

Please refer to FIGs. 8 and 9 for the verifying flowchart of the present invention. As shown in the FIG., the verifying process of the present invention includes at least the following steps:
1. The calculation of carbon verification value A1 refers to the artificial intelligence calculation of the carbon verification value of the verified unit ends 5 or products. The verified unit ends 5 submits the verification report and inventory list to the verifying unit end 3, and the verifying ratio can be set by the verified unit ends 5, provided that the ratio is at least 15% or above or meets the verifying standards. The verifying unit end 3 verifies the correctness of the verification report and inventory list. This step is carried out by the accounting organization and product carbon emission numerical module 31 and the verification report and inventory list module 32, and the preliminary verification results are sent to the interactive sampling data verification platform module 35.
2. A sampling proportion operation A2: the major emission source activity data sampling module 33 conducts the sampling proportion operation based on the major emission source and activity data, and sends the data to the interactive sampling data verification platform module 35.
3. Confirm activity data A3, which is confirmed by the OCR character recognition module 34 and includes:
   a. Company's systematic operation data character recognition verification. After sampling, the verified unit ends 5 are requested to provide a systematic screenshot to the interactive sampling data verification platform module 35 to verify the OCR character recognition of the document voucher image data. If the data is untrustworthy, the data should be marked and then discussed on the collaborative platform.
   b. Verification of the OCR character recognition of image data and paper data, verify the OCR character recognition of the document voucher image data. If the data is untrustworthy, the data should be marked and then discussed on the collaborative platform.
4. A comparison of software built-in carbon verification coefficient A4 is the comparison of software built-in verification database 36 and the data after OCR character recognition verification, including:
   a. The verified unit ends 5 use carbon coefficient: there is a built-in verification database 36 to compare the differences in numerical values. If the data is untrustworthy, the data should be marked and then discussed on the collaborative platform.
   b. The verified unit ends 5 use carbon coefficient: there is no built-in verification database 36, and numerical differences cannot be compared, the verified unit ends 5 provide screenshots and standards of the cited carbon coefficient, and then discuss on the collaborative platform.
5. On-site verification A5: after the operation of the collaborative platform, in view of the untrustworthy of the above marked activity data or the verification database 36, a list file is drawn up, which can be used for on-site verification when verifying boundaries and emission sources.
6. Certification assignment A6, if the data is verified to be correct, carry out the certification assignment. If the data is incorrect or needs to be clarified, log in to the interactive sampling data verification platform module 35 and give the report on verifying findings to the verified unit ends 5 for response, and before the next stage of on-site verification, a new verification report and inventory list will be produced and provided to the verifying unit end 3.

The invention utilizes the aforementioned OCR character recognition for verification, which saves personnel operation and the process of commuting to and from the verified unit ends 5, thereby saving a lot of manpower and time, simplifying the work process, accelerating on-site verification time, and carrying out 100% activity data and carbon coefficient verifying work. Furthermore, improving the disadvantages of the conventional verification operations which require a significant amount of time to prepare and confirm the data to be verified.

The aforementioned embodiments are only intended to illustrate the preferred embodiments of the present invention, and not to limit its scope. Any minor modifications or alternation still serve the essence of the present invention and do not fall outside the scope of its spirit.

In summary, the present invention uses the verified unit ends 5 to provide the verification report and inventory list, as well as the document voucher image data attached to each item listed in the verification process, and other information to be verified. The verifying unit end conducts a verification of the optical character recognition (OCR) data, cited carbon coefficient data, and other necessary data using a sampling proportion on the verification report, the inventory list, and the document voucher image data, directly conducting verification operation against the verified unit ends that use digital platform to collect data. This can save a lot of manpower and time, simplify the work process, accelerate on-site verification time, and carry out 100% activity data and carbon coefficient verifying work.

## Claims

1. A greenhouse gas verifying system at least comprising a verifying unit end (3), and a plurality of verified unit ends (5) connected to the verifying unit end (3) through a communication network (4), **characterized in that**:
the verifying unit end (3) at least includes:
an accounting organization and product carbon emission numerical module (31) for calculating carbon emission of all direct/indirect emission sources at the verified unit ends (5);
a verification report and inventory list module (32) used to record and report greenhouse gas emissions at the verified unit ends (5);
a major emission source activity data sampling module (33) for determining sampling quantity (proportion) and allocation of samples in various categories, and sampling allocation under various evaluation modes that cause differences in data quality;
an OCR character recognition module (34) performing sampling proportion operation (A2) on activity data of the document voucher image data attached to each item listed in the verification process, compare relevant verifying data provided by a built-in verification database (36), performing optical character recognition verification of the data, then obtaining relevant text and digital data, and providing the relevant text and digital data to a collaborative platform;
an interactive sampling data verification platform module (35) used by verifiers to raise questions or supplement suggestions when the data is incorrect or needs to be clarified, and by the verified unit ends (5) to provide response explanations or supplement data.

2. The greenhouse gas verifying system as claimed in claim 1, wherein the accounting organization and product carbon emission numerical module (31) calculates carbon emissions of all direct/indirect emission sources of the verified unit ends (5) based on calculation scope of an organizational boundary and an operational boundary.

3. The greenhouse gas verifying system as claimed in claim 1, wherein the verification report and inventory list module (32) includes verification objectives, methods, scope, data collection process, emission calculation methods, and emission results of the verified unit ends (5), and the document voucher image data attached to each item listed in verification process.

4. The greenhouse gas verifying system as claimed in claim 1, wherein verifying ratio of the verification report and inventory list provided by the verified unit ends (5) is determined by the verified unit ends (5) and is at least 15% or above or meets the verifying standards.

5. The greenhouse gas verifying system as claimed in claim 1, wherein confirming the activity data includes image recognition and verification of systematic operation data of the verified unit ends (5), as well as the image recognition and verification of paper data and image data.

6. The greenhouse gas verifying system as claimed in claim 1, wherein the verification database provides the carbon coefficients of various countries or third-party manufacturers, as well as the carbon footprints marked on equipment of various brands/models, and other verification related data for comparison by the OCR character recognition module (34).

7. A greenhouse gas verifying method comprising:
calculating carbon verification value of the verified unit ends (5) or products, submitting, by the verified unit ends (5), the verification report and inventory list to the verifying unit end (3), verifying, by the verifying unit end (3), the correctness of the verification report and inventory list, and sending preliminary verification results to the interactive sampling data verification platform module (35);
conducting sampling proportion operation (A2) based on major emission source and activity data, and sending the data to the interactive sampling data verification platform module (35);
verifying the OCR character recognition of the document voucher image data, and confirming activity data (A3);
comparing verification related data provided by built-in verification database (36) and the data after OCR character recognition verification;
if the data is verified to be correct, carrying out certification assignment (A6), if the data is incorrect or needs to be clarified, making a response by the verified unit ends (5), and before the next stage of on-site verification, a new verification report and inventory list will be produced and provided to the verifying unit end (3).

8. The greenhouse gas verifying method as claimed in claim 7, wherein the calculation of carbon verification value of the verified unit ends (5) or products is to calculate carbon emissions of all direct/indirect emission sources of the verified unit ends (5) based on calculation scope of an organizational boundary (311) and an operational boundary (312).

9. The greenhouse gas verifying method as claimed in claim 7, wherein the verification report and the inventory list include verification objectives, methods, scope, data collection process, emission calculation methods, and emission results of the verified unit ends (5), and the document voucher image data attached to each item listed in verification process.

10. The greenhouse gas verifying method as claimed in claim 7, wherein verifying ratio of the verification report and inventory list provided by the verified unit ends (5) is determined by the verified unit ends (5) and is at least 15% or above or meets the verifying standards.

11. The greenhouse gas verifying method as claimed in claim 7, wherein confirming the activity data includes image recognition and verification of systematic operation data of the verified unit ends (5), as well as the image recognition and verification of paper data and image data.

12. The greenhouse gas verifying method as claimed in claim 7, wherein the verification database (36) provides the carbon coefficients of various countries or third-party manufacturers, as well as the carbon footprints marked on equipment of various brands/models, and other verification related data for comparison by the OCR character recognition module (34).
